# FASCICULE DE BREVET EUROPEEN

(11) **EP 2 877 765 B1**
(45) Date de publication et mention de la délivrance du brevet: **08.08.2018**
(21) Numéro de dépôt: 13747460.7
(22) Date de dépôt: 17.07.2013
(51) Int. Cl.: F16K 31/04, F16K 37/00, F16K 31/50, G01L 3/10

(54) **VANNE MOTORISÉE COMPORTANT UNE DOUILLE INSTRUMENTÉE**
MOTORISIERTES VENTIL MIT EINER INSTRUMENTIERTEN HÜLSE
MOTORISED VALVE COMPRISING AN INSTRUMENTED SLEEVE

(30) Priorité: 26.07.2012 FR 1257271
(43) Date de publication de la demande: 03.06.2015
(73) Titulaire: Electricité de France, 75008 Paris (FR)
(72) Inventeur: MERIEUX, Christophe, F-77210 Avon (FR)
(74) Mandataire: Cabinet Plasseraud
(86) Numéro de dépôt international: PCT/FR2013/051727
(87) Numéro de publication internationale: WO 2014/016496

(56) Documents cités:
- EP-A2- 0 347 764
- WO-A1-99/60369
- DE-A1- 2 250 141
- US-A- 5 931 044
- US-A1- 2003 066 981
- US-A1- 2008 252 475

## Description

La présente invention est relative à une vanne motorisée.

Les documents US5931044A, US2008252475A1, US2003066981A1, EP0347764 et WO9960369A1 concernent notamment des vannes motorisées.
Plus particulièrement, l'invention se rapporte à une vanne motorisée comportant un servomoteur muni d'un axe de sortie, un écrou de manoeuvre et une douille d'accouplement liée au servomoteur et à l'écrou de manoeuvre pour coupler en rotation l'axe de sortie du servomoteur et l'écrou de manoeuvre. L'invention se rapporte également à un système de robinetterie comprenant ladite vanne.

Lors d'un diagnostic de bon fonctionnement d'une vanne motorisée, il est connu de mesurer l'effort au niveau de la tige de manoeuvre afin de s'assurer de l'étanchéité de la vanne une fois fermée. La valeur de cet effort, qui garantit que la fonction de fermeture de la vanne est effective s'appelle le critère d'opérabilité. Ce critère d'opérabilité est fonction du couple délivré par le servomoteur et du rendement global de la chaîne cinématique de la vanne. La mesure d'effort permet alors de garantir ou non l'étanchéité de la vanne. La cause d'un effort souhaité non atteint peut être, soit un problème au niveau du servomoteur de la vanne, soit un problème à un niveau quelconque de la chaîne cinématique. Ainsi, il convient de savoir si toute la chaîne cinématique est correcte, et cela à chaque interface afin de déterminer, dans le cas contraire, le composant défectueux qui a un impact sur la réponse globale. Il n'est aujourd'hui pas toujours possible de déterminer la cause précise de la défaillance. En particulier, il n'est pas toujours possible de déterminer si la défaillance provient du servomoteur, ou bien est située à un autre niveau de la chaîne cinématique de la vanne. Ainsi, en cas de défaillance, on peut choisir de tester le servomoteur sur banc d'essai en mesurant le couple qu'il est capable de délivrer. Il peut s'avérer alors que le servomoteur est en bon état et que la défaillance vient d'un autre élément de la vanne. Le démontage du servomoteur aura alors été fait pour rien. Réciproquement, on peut choisir un démontage complet de la vanne et découvrir que seul le servomoteur était concerné par la défaillance. Le démontage total de la vanne aura alors été fait pour rien. Pour éviter cette situation, il est nécessaire d'insérer des systèmes de mesure à différentes interfaces de la chaîne cinématique de la vanne et en particulier un système de mesure du couple délivré par le servomoteur. De tels systèmes sont couramment utilisés aujourd'hui. Néanmoins, il existe encore des lacunes dans ce domaine. En effet, bien que des systèmes de mesure pour mesurer par exemple le couple fourni par le servomoteur existent, leur mise en oeuvre pratique sur la vanne entraîne des modifications structurelles souvent lourdes et inadéquates, car l'insertion de ces systèmes de mesure entre les différents composants de la vanne entraîne une modification de la géométrie de la vanne et donc de sa rigidité. Par exemple, l'insertion de ces systèmes de mesure peut rallonger la géométrie de l'ensemble.

Le remplacement d'une vanne existante par une vanne comportant ces systèmes de mesure n'est alors pas possible sans remettre en cause par exemple les études de résistance aux séismes de l'installation comportant cette vanne. Or cette remise en cause peut ne pas être acceptable, notamment dans certains domaines comme par exemple le domaine des centrales nucléaires. Il en résulte le maintien en fonctionnement dans les installations, notamment les centrales nucléaires, de vannes motorisées classiques nécessitant alors, en cas de dysfonctionnement, le démontage de tout ou partie de la vanne, ce qui implique un arrêt total de celle-ci qui peut avoir de lourdes conséquences aussi bien économiques que logistiques. On notera que dans les centrales nucléaires, un démontage d'une vanne implique l'arrêt total de la tranche nucléaire correspondante.

La présente invention a notamment pour but de pallier ces inconvénients et vient améliorer la situation.

A cet effet, selon l'invention, une vanne motorisée du genre en question est munie d'une douille comportant :
- un dispositif de mesure directe du couple délivré par l'axe de sortie du servomoteur à l'écrou de manoeuvre et,
- un émetteur sans contact de données de mesure relevées par le dispositif de mesure.

Grâce à ces dispositions, la douille assure à la fois la transmission du mouvement entre le servomoteur et l'écrou de manoeuvre, mais aussi la mesure dynamique du couple produit par le servomoteur. La douille est une pièce mécanique particulière interne à la vanne et son instrumentation permet de ne pas modifier l'architecture de la vanne. La mesure du couple se fait à l'intérieur de la vanne elle-même et est rendue possible grâce à la présence de la douille et de l'écrou de manoeuvre. La vanne motorisée du genre en question a les mêmes caractéristiques géométriques et la même rigidité qu'une vanne classique ne permettant pas la mesure du couple délivré par le servomoteur et peut donc lui être substituée. Selon l'invention, la valeur du couple en sortie du servomoteur est directement mesurée sans modification structurelle profonde de la vanne. La mesure directe de cette valeur de couple permet à tout moment de déduire si le défaut provient de la partie basse de la vanne (dans le cas d'une vanne à opercule, par exemple, du coincement des opercules), de l'accouplement entre le servomoteur et l'écrou de manoeuvre, ou encore du servomoteur. Il en résulte une réduction des interventions sur la partie basse de la vanne lorsque le servomoteur est en cause. En outre, grâce à ces dispositions, il est possible de changer le dispositif de mesure, par exemple pour étalonnage et de le remplacer par un autre de façon simple.

Avantageusement la douille de la vanne motorisée forme interface entre l'écrou de manoeuvre et le servomoteur pour définir deux modes de fonctionnement, à savoir un mode opérationnel, dans lequel la douille, couplée au servomoteur et à l'écrou de manoeuvre, assure la transmission du mouvement du servomoteur à l'écrou de manoeuvre et la mesure du couple délivré par l'axe de sortie du servomoteur ; et un mode de maintenance, dans lequel un découplage de l'écrou de manoeuvre de la vanne et de l'axe de sortie du servomoteur est assuré par l'intermédiaire de la douille.
En cas de maintenance, par exemple, le découplage de l'écrou de manoeuvre et du servomoteur assure des opérations simplifiées.

Dans une réalisation de l'invention, l'écrou de manoeuvre est irréversible et, la vanne ayant atteint une position d'obturation prédéterminée en mode opérationnel, ladite position est maintenue en mode de maintenance lorsque le servomoteur et l'écrou de manoeuvre sont découplés.

On entend ici par irréversible le fait que, le servomoteur ayant été découplé de l'écrou de manoeuvre, celui-ci reste dans sa position initiale atteinte avant le découplage du servomoteur, et par conséquent maintient la position d'obturation de la vanne. Le maintien de cette position permet sans danger de découpler le servomoteur sans obligatoirement mettre à l'arrêt l'ensemble de la vanne.

En outre, la vanne motorisée selon l'invention peut comporter un module de traitement interne installé sur la douille qui traite les données provenant du dispositif de mesure directe avant de les diriger vers l'émetteur sans contact.

Le module de traitement interne sert d'interface entre l'émetteur sans contact et le dispositif de mesure directe.

En l'espèce, la vanne motorisée peut comporter un système externe à la douille qui alimente sans contact la douille et reçoit les données de mesure émises par l'émetteur sans contact.

Ce système externe est distinct de la douille et permet d'alimenter énergétiquement les éléments présents sur la douille, par exemple l'émetteur sans contact, le dispositif de mesure du couple et éventuellement le module de traitement.

Les données de mesure émises par l'émetteur sans contact peuvent être traitées par un processeur externe à des fins de diagnostic automatique du fonctionnement du servomoteur.

Dans une réalisation possible de l'invention, le dispositif de mesure direct du couple comprend un capteur de couple muni de jauges d'extensomètrie situées sur la douille.

Les capteurs à jauges extensométriques forment des capteurs de couple permettant des mesures fiables et fidèles ainsi qu'une mise en oeuvre facile.

Avantageusement, les données de mesure relevées par le dispositif de mesure peuvent être transmises par télémétrie.

La transmission par télémétrie est une solution pour réaliser une absence de contact.

En outre, le dispositif de mesure de la douille d'accouplement peut comporter des jauges d'extensomètrie.

L'invention vise en outre un système de robinetterie électrique de centrale nucléaire comprenant une vanne motorisée telle que précédemment décrite, ainsi qu'un module de traitement d'une douille d'accouplement d'une telle vanne motorisée pour la mise en oeuvre du traitement des données provenant du dispositif de mesure directe. Le module de traitement est externe à la douille et comprend des moyens de collecte des données, des moyens de traitement des données et des moyens de diagnostic d'un état de fonctionnement de la vanne.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue en coupe d'une vanne motorisée avec un processeur ;
- la figure 2 est une vue du détail II de la vanne de la figure 1 ;
- la figure 3 est une vue schématique de face et de dessus d'une douille instrumentée selon l'invention ;
- les figures 4A à 4D sont des exemples de réalisation de douilles instrumentées de dispositif de mesure de couple ;
- la figure 5 est un organigramme représentant des étapes possibles pouvant être mises en oeuvre par un processeur pour réaliser un diagnostic de l'état de fonctionnement du servomoteur.

Sur les différentes figures, les mêmes références désignent des éléments identiques ou similaires.

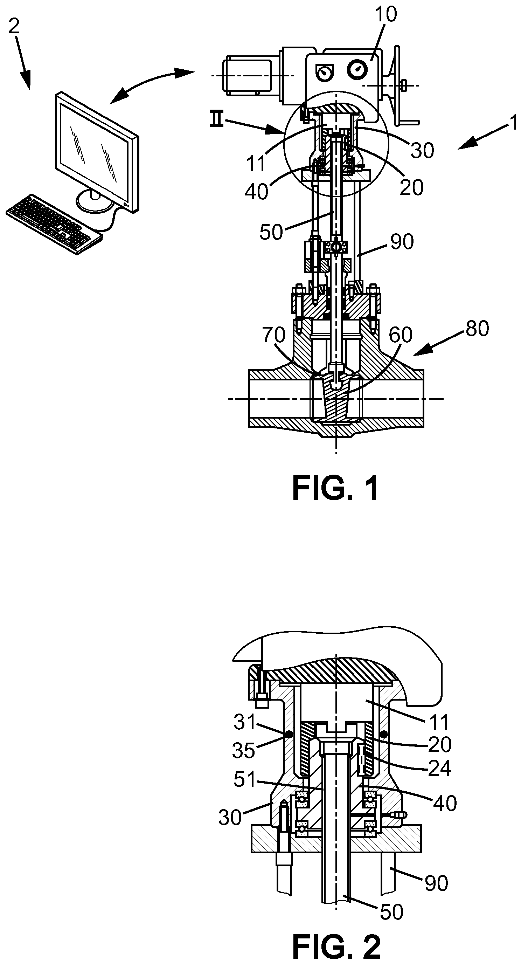

La figure 1 représente une vanne 1 à opercule classique. Bien que la description ci-après soit faite en référence à la vanne de la figure 1, l'invention ne se limite pas aux vannes à opercules et concerne toutes les vannes de structures similaires.

La vanne 1 comprend de façon connue un corps de vanne 80 sur lequel est montée une arcade 90 dont l'extrémité opposée au corps de vanne constitue la base d'une boîte à butées 30. La vanne 1 comprend en outre une tige de manoeuvre 50 d'un obturateur 60. La tige de manoeuvre 50 traverse l'arcade 90 et a une partie filetée 51 (voir figure 2) à une de ses extrémités, et à son autre extrémité débouche dans le corps de vanne 80. La partie débouchant dans le corps de vanne est solidaire de l'obturateur 60. La boîte à butées 30 comprend un carter dans lequel est localisé un écrou de manoeuvre 40. L'écrou de manoeuvre 40 est creux et coopère dans sa partie intérieure avec la partie filetée 51 de la tige de manoeuvre 50. Sur sa périphérie extérieure, opposée à sa partie intérieure, l'écrou de manoeuvre 40 coopère avec une douille 20. La coopération entre l'écrou de manoeuvre 40 et la douille 20 peut par exemple, s'effectuer par l'intermédiaire d'une clavette 24 (cf. figure 2). La douille 20 peut comporter une section générale annulaire et coopère dans sa partie creuse avec l'écrou de manoeuvre 40. La douille 20 coopère également directement avec l'axe de sortie 11 d'un servomoteur 10. Le servomoteur 10 va délivrer par la rotation de son axe de sortie 11 un couple qui va être transmis directement à la douille 20, puis à l'écrou de manoeuvre 40. L'écrou de manoeuvre 40 en rotation imprime un mouvement de translation à la tige de manoeuvre 50 suivant son axe X. Il y a en d'autres termes conversion du mouvement de rotation de l'axe de sortie 11 du servomoteur 10 en mouvement de translation de la tige de manoeuvre 50 par l'intermédiaire de l'écrou de manoeuvre 40 et de la coopération de son filetage intérieur avec le filetage extérieur de l'extrémité 51 de la tige de manoeuvre 50. Le mouvement de translation suivant l'axe X de la tige de manoeuvre 50 permet l'ouverture ou la fermeture de la vanne 1 par l'intermédiaire de l'obturateur 60. L'obturateur est, dans un mode de réalisation de l'invention, un opercule 60 qui glisse le long d'un siège 70 pour l'ouverture ou la fermeture de la vanne 1.

La douille 20 sert d'interface entre l'écrou de manoeuvre 40 et le servomoteur 10 et permet de découpler en cas de besoin, par exemple pour maintenance, ces deux éléments. Plus particulièrement, la douille 20 permet de définir deux modes de fonctionnement, soit un mode opérationnel et un mode de maintenance. Dans le mode opérationnel, la douille 20, couplée au servomoteur 10 et à l'écrou de manoeuvre 40 assure la transmission du mouvement du servomoteur 10 à l'écrou de manoeuvre 40 et la mesure du couple délivré par l'axe de sortie du servomoteur 10. Dans le mode de maintenance, un découplage de l'écrou de manoeuvre 40 de la vanne 1 et de l'axe de sortie 11 du servomoteur 10 est assuré par l'intermédiaire de la douille 20.

En mode de maintenance, c'est-à-dire lors du découplage de l'écrou de manoeuvre et du servomoteur 10, l'obturateur 60 de la vanne 1 reste dans une même position d'obturation. En l'occurrence, l'écrou de manoeuvre 40 est irréversible et son irréversibilité empêche la rotation de la tige 50 suite à un effort longitudinal sur elle et permet ainsi le maintien de l'obturateur 60 en position. En d'autres termes, l'obturateur 60, qui est dans une position d'obturation déterminée est soumis à des efforts longitudinaux le long de l'axe X. En mode de fonctionnement, le servomoteur 10 maintient un effort continu et permet un ajustement précis de la position désirée d'obturation. Ainsi un effort constant est appliqué sur l'écrou de manoeuvre qui permet un maintien précis de la position de la tige de manoeuvre 50, et donc de l'obturateur 60. Lors du découplage de l'écrou de manoeuvre 40 et du servomoteur 10, l'obturateur 60 est toujours soumis à des efforts longitudinaux selon l'axe X mais, le servomoteur 10 étant découplé de l'écrou de manoeuvre 40, aucun « contre-effort » existe pour maintenir l'obturateur 60 en position. Les efforts longitudinaux le long de l'axe X appliqué sur l'obturateur 60 vont être transmis à la tige de manoeuvre 50. En présence d'un écrou de manoeuvre 40 réversible, l'effort longitudinal appliqué sur la tige de manoeuvre 50 implique la rotation de l'écrou de manoeuvre 40 et la translation de la tige de manoeuvre 50 dans une position d'ouverture de la vanne 1 non désirée et non commandée. Dans le cas présent, avantageusement l'écrou de manoeuvre 40 est irréversible et son irréversibilité implique un blocage de la rotation non désirée de l'écrou de manoeuvre 40. La tige de manoeuvre 50 ne peut donc pas se translater et l'obturateur 60 reste dans sa position initiale, insensible aux efforts longitudinaux qui lui sont appliqués.

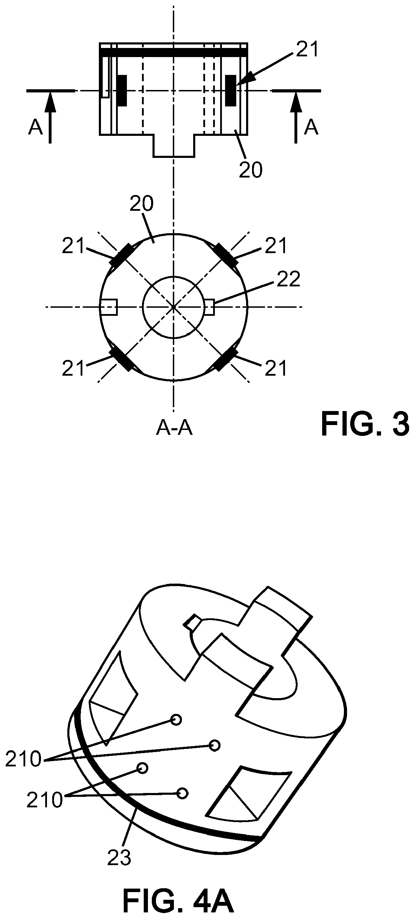

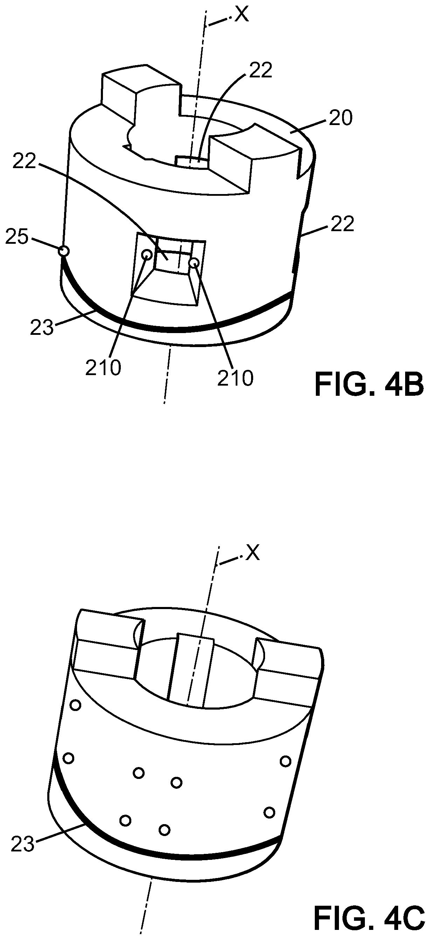

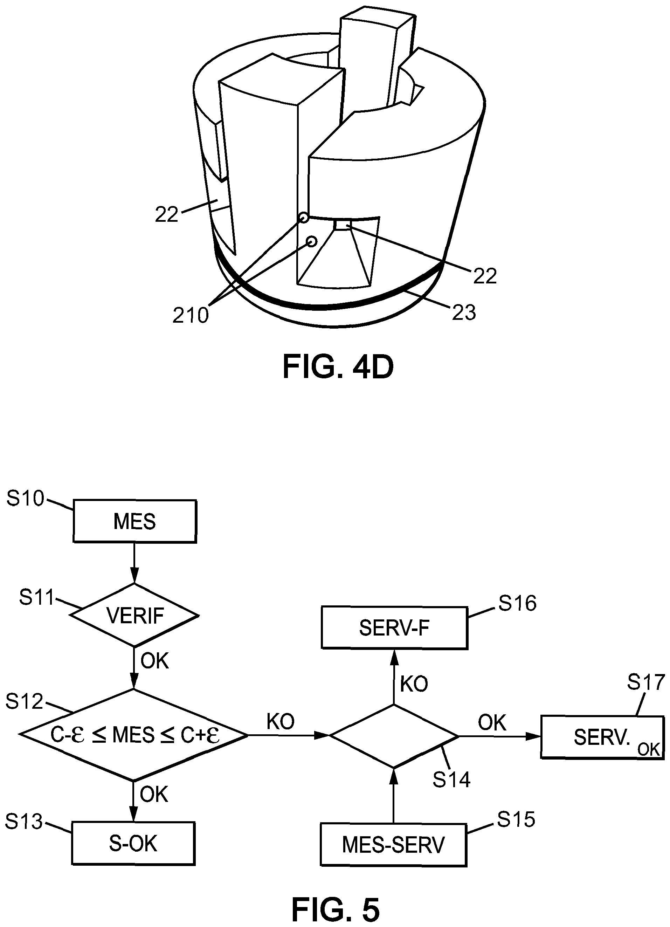

L'écrou de manoeuvre et le servomoteur sont lubrifiés par de la graisse et le rendement du servomoteur 10 peut évoluer au cours du temps et notamment en fonction du nombre de manoeuvre. La douille 20 est munie d'un dispositif de mesure directe du couple délivré par l'axe de sortie 11 du servomoteur 10 à l'écrou de manoeuvre 40. Le dispositif de mesure comporte une instrumentation spécifique, par exemple des capteurs 21 (cf. figure 3) suffisamment sensibles pour permettre la mesure de couple et/ou d'effort au sein de la douille d'accouplement. La figure 3 représente une vue de coté et une vue en coupe selon l'axe AA d'un mode de réalisation d'une douille instrumentée selon l'invention. La douille de la figure 3 comprend des capteurs 21 répartis de façon régulière sur la périphérie extérieure de la douille 20. Le dispositif de mesure directe peut, dans une variante de l'invention, comprendre un capteur de mesure de couple 21 composé de jauges d'extensomètrie 210. Les jauges d'extensomètrie 210 peuvent être collées sur la douille 20, soit à l'extérieur de celle-ci, soit au contraire à l'intérieur de celle-ci dans des logements prévus à cet effet. Le collage des jauges d'extensomètrie 210 sur la douille permet d'utiliser comme douille une douille classique de vanne en la modifiant légèrement. Ainsi, la rigidité de la douille d'accouplement 20, et donc la rigidité de la vanne 1 est peu ou pas modifiée par rapport à une vanne classique. Si l'on substitue l'invention à une vanne classique, la qualification aux conditions accidentelles et notamment la tenue au séisme de la vanne 1 n'est pas remise en cause. Les jauges d'extensomètrie 210 sont situées et câblées sur la douille 20 de telle façon qu'elles vont être sensibles à la torsion de la douille 20. Les jauges 210 peuvent être collées en partie externe de la douille 20, ce qui permet un usinage peu important de la douille 20. Le câblage des jauges 210 peut être réalisé en pont complet ou demi-pont, voire en quart de pont. Les figures 4A et 4C illustrent un exemple de jauges d'extensomètrie 210 collées sur la partie externe de la douille 20 et câblées en pont complet. Alternativement, la douille 20 peut être usinée de façon un peu plus importante que lorsque les jauges 210 sont collées directement sur la partie externe de la douille 20. Cet usinage plus prononcé d'une douille classique de vanne pour l'instrumenter permet de travailler sur la flexion interne de la douille et de garantir une meilleure sensibilité de la mesure de couple. L'usinage peut être réalisé sous forme de méplats, perçages ou encore tout autre usinage connu. En contrepartie, la tenue de la douille 20 aux contraintes maximales de couple sans endommagement de celle-ci peut nécessiter un matériau d'une raideur particulière et supportant de fortes sollicitations mécaniques de chargement. Les figures 4B et 4D illustrent un exemple de jauges 210 collées à l'intérieur de la douille 20 dans des usinages prévus à cet effet. Par exemple, et tel qu'illustré sur les figures 4B et 4D, les jauges 210 peuvent être réparties à l'intérieur d'évidements 22 prévus sur la douille 20. Sur l'exemple représenté, la douille 20 est creuse et les évidements 22 sont traversants. Dans une autre variante de l'invention, des logements peuvent être prévus non traversants. Les évidements traversants 22 des figures 4B et 4D sont au nombre de quatre et régulièrement répartis autour de l'axe longitudinal X. Les jauges d'extensomètrie 210 sont alors collées au sein même de ces évidements. Le nombre d'évidements 22 prévu sur la douille 20 peut varier. Les jauges d'extensomètrie 210 sont un exemple non limitatif de capteur de couple 21 réalisant l'instrumentation de la douille 20. D'autres types de capteurs 21 pour la mesure du couple et/ou de l'effort, ou encore de la température peuvent être envisagés.

Une fois les données mesurées par le dispositif de mesure directe du couple 21, celles-ci doivent être traitées. Un module de traitement interne 25 peut pour cela être installé sur la douille 20. Ce module de traitement interne 25 peut traiter les données provenant du dispositif de mesure (par exemple en les formatant pour faciliter leur transmission) avant de les diriger vers un émetteur interne 23. Les données traitées par le module de traitement interne 25 à la douille 20 vont ensuite être transférées à l'extérieur de la douille.

En l'espèce, un émetteur/récepteur interne 23 à la douille 20 est prévu permettant de transmettre sans contact les données relevées par le dispositif de mesure 21 et transmises par le module de traitement interne 25 installé sur la douille 20. L'émetteur/récepteur interne 23 coopère avec un émetteur/récepteur externe 31 à la douille 20 qui permet d'alimenter sans contact la douille instrumentée 20 et de récupérer les données du dispositif de mesure 21 en temps réel. En d'autre termes, la douille instrumentée 20, et plus particulièrement le dispositif de mesure directe du couple 21 (ou capteur) est alimenté et les données mesurées sont simultanément transmises et récupérées par l'émetteur/récepteur externe 31. Les données n'ont pas besoin d'être enregistrées dans une mémoire tampon.

Avantageusement la transmission des données de la douille 20 vers l'extérieur s'effectue par télémétrie. Néanmoins, d'autres technologies sans fil peuvent être utilisées. Une antenne mobile 23 avec la douille 20 est fixée sur ladite douille 20. Cette antenne mobile 23 fixée sur la douille 20 coopère avec une antenne fixe 31 située dans la boîte à butées 30. L'antenne mobile 23 est alimentée sans contact par le champ magnétique créé à proximité par l'antenne fixe 31.
La douille 20 et ses équipements internes 21, 23, 25 à savoir le dispositif de mesure 21, le module de traitement interne 25 et l'émetteur/récepteur 23 interne sont équilibrés afin de ne pas créer un balourd lors du montage de l'ensemble qui déséquilibrerait celui-ci. L'antenne mobile 23, présente sur la douille 20, transmet à l'antenne fixe 31 de la boîte à butées 30 les informations traitées par le module de traitement interne 25. Après réception de ces informations, celles-ci sont transmises à un module de traitement 35 et d'alimentation externe à la douille 20 dont la fonction est d'alimenter l'émetteur/récepteur externe 31 et de retraiter les données transmises par les instruments 21, 23 prévus sur la douille. En outre, le module de traitement externe 35 peut être apte à collecter des données, traiter des données et diagnostiquer un état de fonctionnement de la vanne 1.
L'invention obtenue permet donc de mesurer le couple directement en sortie du servomoteur 10 qui, avantageusement, est un servomoteur électrique. Un tel montage permet de faire des mesures directement sur l'axe de sortie 11 du servomoteur 10. Il est également possible, avec un tel montage de mesurer l'effort afin de s'assurer que la douille 20 n'est pas comprimée, ce qui pourrait diminuer sa durée de vie, avoir une influence sur les données mesurées et diminuer le rendement de transmission du couple entre le servomoteur 10 et la tige de manoeuvre 50. Eventuellement, un capteur de température peut être prévu, afin de déterminer une éventuelle surchauffe.
Dans une réalisation possible de l'invention, une tension V, par exemple comprise entre 0 et 10 Volts, est délivrée en sortie de la vanne 1 par l'instrumentation prévue à cet effet, par exemple par le module de traitement externe 35. La tension V est alors fonction du couple délivré en sortie de servomoteur 10.
Dans une réalisation possible de l'invention, la vanne 1 communique avec une chaîne d'acquisition de mesures et la tension V représentative du couple est envoyée à la chaîne d'acquisition de mesures afin que celle-ci réalise divers traitements de cette mesure, en lien avec tout un ensemble de mesures effectuées simultanément sur la vanne.
En particulier, la chaîne d'acquisition de mesures peut, dans une variante possible de réalisation, être limitée à une seule voie d'acquisition et directement convertir la tension V en un signal, par exemple un signal lumineux susceptible de présenter à un opérateur un état de fonctionnement ou de dysfonctionnement du servomoteur.

Dans une autre réalisation possible de l'invention, un processeur 2 peut être prévu pour exécuter un produit programme informatique mettant en oeuvre des opérations de collecte des données fournies par le module de traitement 25 et issues du dispositif de mesure directe 21 de la vanne 1 ainsi que des traitements desdites données pour diagnostiquer un état de fonctionnement en sortie du servomoteur de la vanne 1. Les données sont alors fournies par le module de traitement externe 35 situé à l'extérieur de la douille 20. Le processeur 2 va pouvoir, à partir de la valeur du couple délivré en sortie de servomoteur mesuré par l'intermédiaire de la douille, diagnostiquer un état de fonctionnement de la vanne, et plus précisément va pouvoir déterminer si des écarts sont mesurés entre le couple désiré en sortie de servomoteur et le couple mesuré. Selon les valeurs obtenues, le processeur 2 sera en mesure, à partir d'autres paramètres fonctionnels de la vanne, de déterminer si une intervention doit avoir lieu sur le servomoteur uniquement, ou si l'ensemble de la vanne doit être arrêté. La figure 5 représente plus particulièrement un organigramme d'un exemple de procédé apte à être mis en oeuvre par un produit programme informatique lors de son exécution par un processeur 2. La cellule S10 de l'organigramme représente la mesure du couple du servomoteur sur son axe de sortie par la douille instrumentée telle que précédemment décrite. La mesure, et plus particulièrement la valeur de la mesure réalisée par la douille instrumentée, est collectée (étape S10) puis est vérifiée (étape S11) afin de s'assurer que celle-ci n'est pas aberrante et qu'il n'y a pas eu d'erreur dans la transmission des données. Par exemple, une mesure de couple nulle, alors que le servomoteur et l'obturateur de la vanne sont en fonctionnement pourra être considérée comme aberrante. Une fois la mesure vérifiée (cellule S11) et correcte (état OK), il peut y avoir une étape de comparaison de la valeur du couple mesuré par la douille instrumentée 20 et de la valeur du couple attendu du servomoteur 10 (cellule S12). Si la valeur du couple attendu et la valeur du couple mesuré sont sensiblement égales (état OK), alors le système sera capable de diagnostiquer un état de fonctionnement du servomoteur 10 correct (cellule S13). Dans le cas contraire, si la valeur du couple attendu du servomoteur 10 et du couple mesuré sont sensiblement différentes (état KO), d'autres tests peuvent éventuellement être nécessaires pour s'assurer de l'état de fonctionnement exact du servomoteur et par conséquent de la vanne 1 à partir de la mesure réalisée par la douille instrumentée 20 (cellule S14). Ces tests peuvent prendre en considération les mesures réalisées de température ou encore d'effort et vont alors permettre le diagnostic d'un état défectueux du servomoteur (cellule S16) ou au contraire d'un état de fonctionnement correct du servomoteur (cellule S17). Le diagnostic peut bien entendu se faire de façon simplifiée avec une étape de mesure de la valeur du couple en sortie de servomoteur et sa collecte, une étape de traitement des données collectées, et une étape de diagnostic d'un état de fonctionnement défectueux ou non du servomoteur 10 de la vanne 1(par exemple par la comparaison entre la valeur de couple mesurée et celle initialement commandée). En outre, rappelons que le couple délivré par le servomoteur est un paramètre de détermination du critère d'opérabilité précédemment défini.

L'accouplement entre le servomoteur 10 et l'écrou de manoeuvre 40 est instrumenté afin de mesurer le couple fourni en sortie de servomoteur 11 lors de sa transmission à l'écrou de manoeuvre 40. L'instrumentation mise en oeuvre par ce biais sur la douille 20 est un système autonome communiquant avec l'extérieur de la douille 20 sans contact. La mesure du couple est ainsi réalisée avec un dispositif générique qui est situé uniquement à l'interface d'accouplement. Il est ainsi possible de transformer, sans difficultés particulières d'intégration, une vanne 1 préexistante munie d'une douille classique non instrumentée par une vanne selon l'invention. En effet, il suffit de remplacer la douille non instrumentée présente sur la vanne par une douille instrumentée 20 telle que précédemment décrite. La nouvelle douille 20, respectant l'équilibrage et la structure de l'ancienne douille non instrumentée, est alors intégrée au système sans difficultés. Les éléments extérieurs à la douille, comme par exemple l'émetteur récepteur externe 31 à la douille et éventuellement le module de traitement et d'alimentation 35 externe peuvent être intégrés sans difficultés de montage particulières sur le châssis fixe de la vanne 1 et dans la boîte à butées 30. Le dispositif de mesure 21 permet ainsi une mesure directe du couple délivré par le servomoteur 10 sur son axe de sortie 11 qui peut être différent de celui du réglage initial, ou commandé par un opérateur, à cause, par exemple d'un rendement du servomoteur 10 réduit suite à un problème de lubrification, d'une usure suite à un nombre de démarrages excessifs, de jeux et frottements excessifs à l'intérieur du servomoteur 10, etc. La présente invention permet ainsi un gain de temps d'intervention considérable, car une dépose du servomoteur pour le réglage du couple n'est plus forcément nécessaire. La présente invention peut être mise en oeuvre dans des systèmes de robinetterie de centrales nucléaires et permet ainsi d'améliorer le coefficient de disponibilité en exploitation de la centrale. En effet, il est prévu grâce à ce système, de pouvoir augmenter la périodicité de maintenance. Le système, qui permet entre autre un diagnostic plus précis de l'état de la vanne, et particulièrement la détermination, en cas de dysfonctionnement, de l'origine du dysfonctionnement, assure un temps de maintenance réduit, ce qui augmente le nombre de jours possibles de mise en production.

Bien entendu, la présente invention ne se limite pas à la forme de réalisation décrite ci-avant à titre d'exemple ; elle s'étend à d'autres variantes.
Ainsi, dans une variante possible de l'invention, l'écrou de manoeuvre est réversible et les données de mesure du couple peuvent être envoyées sans traitement directement à l'extérieur de la douille par un émetteur sans contact.

Dans un autre mode de réalisation possible, le diagnostic de l'état de fonctionnement du servomoteur est réalisé directement par le module de traitement interne prévu sur la douille.

## Revendications

1. Vanne motorisée (1), comportant :
- un servomoteur (10) muni d'un axe de sortie (11),
- un écrou de manoeuvre (40), et
- une douille d'accouplement (20), liée au servomoteur (10) et à l'écrou de manoeuvre (40) pour coupler en rotation l'axe de sortie (11) du servomoteur (10) et l'écrou de manoeuvre (40), ladite douille (20) comportant :
- un dispositif de mesure directe (21) du couple délivré par l'axe de sortie (11) du servomoteur (10) à l'écrou de manoeuvre (40) et,
- un émetteur sans contact (23) de données de mesure relevées par le dispositif de mesure (21).

2. Vanne motorisée (1) selon la revendication 1, dans laquelle la douille (20) forme interface entre l'écrou de manoeuvre (40) et le servomoteur (10) pour définir au moins deux modes de fonctionnement :
- un mode opérationnel, dans lequel la douille (20), couplée au servomoteur (10) et à l'écrou de manoeuvre (40), assure la transmission du mouvement du servomoteur (10) à l'écrou de manoeuvre (40) et la mesure du couple délivré par l'axe de sortie du servomoteur (11) ; et
- un mode de maintenance, dans lequel un découplage de l'écrou de manoeuvre (40) de la vanne (1) et de l'axe de sortie (11) du servomoteur (10) est assuré par l'intermédiaire de la douille (20).

3. Vanne motorisée (1) selon la revendication 2, dans laquelle l'écrou de manoeuvre (40) est irréversible et, la vanne (1) ayant atteint une position d'obturation prédéterminée en mode opérationnel, ladite position est maintenue en mode de maintenance lorsque le servomoteur (10) et l'écrou de manoeuvre (40) sont découplés.

4. Vanne motorisée selon l'une quelconque des revendications précédentes, dans laquelle un module de traitement interne (25) installé sur la douille (20) traite les données provenant du dispositif de mesure directe (21) avant de les diriger vers l'émetteur sans contact (23).

5. Vanne motorisée (1) selon l'une quelconque des revendications précédentes, dans laquelle un système externe à la douille (20) alimente sans contact la douille (20) et reçoit les données de mesure émises par l'émetteur sans contact (23).

6. Vanne motorisée (1) selon l'une quelconque des revendications précédentes, dans laquelle un module de traitement externe (35) distinct de la douille traite les données provenant du dispositif de mesure directe (21).

7. Vanne motorisée (1) selon l'une quelconque des revendications précédentes, dans laquelle le dispositif de mesure directe (21) du couple comprend un capteur de couple muni de jauges d'extensomètrie (210) situées sur la douille (20).

8. Vanne motorisé (1) selon l'une quelconque des revendications précédentes, dans laquelle les données de mesure relevées par le dispositif de mesure (21) sont transmises par télémétrie.

9. Système de robinetterie électrique de centrale nucléaire comprenant une vanne (1) motorisée selon l'une quelconque des revendications 1 à 8.

## Patentansprüche

1. Motorisiertes Ventil (1), umfassend:
- einen Servomotor (10), der mit einer Ausgangsachse (11) versehen ist,
- eine Betätigungsmutter (40) und
- eine Kupplungshülse (20), die mit dem Servomotor (10) und mit der Betätigungsmutter (40) verbunden ist, um die Ausgangsachse (11) des Servomotors (10) und die Betätigungsmutter (40) in Drehung zu verbinden, wobei die Hülse (20) Folgendes aufweist:
- eine Vorrichtung zum direkten Messen (21) des Drehmoments, das von der Ausgangsachse (11) des Servomotors (10) auf die Betätigungsmutter (40) abgegeben wird, und
- einen kontaktlosen Sender (23) von Messdaten, die von der Vorrichtung zum Messen (21) ermittelt werden.

2. Motorisiertes Ventil (1) nach Anspruch 1, wobei die Hülse (20) die Schnittstelle zwischen der Betätigungsmutter (40) und dem Servomotor (10) bildet, um mindestens zwei Betriebsmodi zu definieren:
- einen Betriebsmodus, bei dem die Hülse (20), die mit dem Servomotor (10) und mit der Betätigungsmutter (40) verbunden ist, das Übertragen der Bewegung des Servomotors (10) auf die Betätigungsmutter (40) und das Messen des Drehmoments, das von der Ausgangsachse des Servomotors (11) abgegeben wird, gewährleistet, und
- einen Wartungsmodus, bei dem ein Entkoppeln der Betätigungsmutter (40) des Ventils (1) und der Ausgangsachse (11) des Servomotors (10) durch die Hülse (20) gewährleistet wird.

3. Motorisiertes Ventil (1) nach Anspruch 2, wobei die Betätigungsmutter (40) irreversibel ist und, nachdem das Ventil (1) im Betriebsmodus eine vorbestimmte Schließposition erreicht hat, die Position im Wartungsmodus beibehalten wird, wenn der Servomotor (10) und die Betätigungsmutter (40) entkoppelt sind.

4. Motorisiertes Ventil nach einem der vorhergehenden Ansprüche, wobei ein internes Verarbeitungsmodul (25), das auf der Hülse (20) installiert ist, die Daten verarbeitet, die von der Vorrichtung zum direkten Messen (21) stammen, bevor sie zum kontaktlosen Sender (23) gelenkt werden.

5. Motorisiertes Ventil (1) nach einem der vorhergehenden Ansprüche, wobei ein System außerhalb der Hülse (20) die Hülse (20) kontaktlos mit Strom versorgt und die Messdaten empfängt, die von dem kontaktlosen Sender (23) gesendet werden.

6. Motorisiertes Ventil (1) nach einem der vorhergehenden Ansprüche, wobei ein externes Verarbeitungsmodul (35), das von der Hülse verschieden ist, die Daten verarbeitet, die von der Vorrichtung zum direkten Messen (21) stammen.

7. Motorisiertes Ventil (1) nach einem der vorhergehenden Ansprüche, wobei die Vorrichtung zum direkten Messen (21) des Drehmoments einen Drehmomentsensor aufweist, der mit Dehnungsmessstreifen (210) versehen ist, die auf der Hülse (20) angeordnet sind.

8. Motorisiertes Ventil (1) nach einem der vorhergehenden Ansprüche, wobei die Messdaten, die von der Vorrichtung zum Messen (21) erfasst werden, per Telemetrie übertragen werden.

9. Elektrisches Armaturensystem eines Kernkraftwerks, umfassend ein motorisiertes Ventil (1) nach einem der Ansprüche 1 bis 8.

## Claims

1. Motor-operated valve (1), comprising:
- a servomotor (10) having an output shaft (11),
- a stem nut (40), and
- a coupling bushing (20) connected to the servomotor (10) and to the stem nut (40) in order to couple the output shaft of the servomotor (11) and the stem nut (40) rotationally, said bushing (20) comprising:
- a measurement device (21) for directly measuring the torque delivered by the output shaft of the servomotor (11) to the stem nut (40), and
- a contactless transmitter (23) for transmitting measurement data obtained by the measurement device (21).

2. Motor-operated valve (1) according to claim 1, wherein the bushing (20) forms an interface between the stem nut (40) and the servomotor (10) so as to define at least two functional modes:
- an operational mode, wherein the bushing (20), coupled to the servomotor (10) and to the stem nut (40), transmits the movement of the servomotor (10) to the stem nut (40) and measures the torque delivered by the output shaft of the servomotor (11); and
- a maintenance mode, wherein a decoupling of the stem nut (40) of the valve (1) and the output shaft (11) of the servomotor (10) is effected by means of the bushing (20).

3. Motor-operated valve (1) according to claim 2, wherein the stem nut (40) is irreversible and, the valve (1) having reached a predetermined closed position in operational mode, said position is maintained during maintenance mode when the servomotor (10) and stem nut (40) are decoupled.

4. Motor-operated valve according to any one of the preceding claims, wherein an internal processing module (25) installed on the bushing (20) processes data from the direct measurement device (21) before passing them on to the contactless transmitter (23).

5. Motor-operated valve (1) according to any one of the preceding claims, wherein a system external to the bushing (20) supplies power to the bushing (20) in a contactless manner and receives the measurement data transmitted by the contactless transmitter (23).

6. Motor-operated valve (1) according to any one of the preceding claims, wherein an external processing module (35) separate from the bushing processes the data from the direct measurement device (21).

7. Motor-operated valve (1) according to any one of the preceding claims, wherein the direct measurement device (21) for measuring the torque comprises a torque sensor provided with strain gauges (210) located on the bushing (20).

8. Motor-operated valve (1) according to any one of the preceding claims, wherein the measurement data obtained by the measurement device (21) are transmitted by telemetry.

9. Electric valve and piping system of a nuclear power plant, comprising a motor-operated valve (1) according to any one of claims 1 to 8.
